# EUROPEAN PATENT SPECIFICATION

(11) **EP 1 966 073 B1**
(45) Date of publication and mention of the grant of the patent: **11.07.2012**
(21) Application number: 06820083.1
(22) Date of filing: 18.12.2006
(51) Int. Cl.: B66D 3/04, B66B 15/04, F16H 55/38

(54) **ELEVATOR TRACTION SHEAVE**
AUFZUGSANTRIEBSSCHEIBE
POULIE DE TRACTION D'ASCENSEUR

(30) Priority: 29.12.2005 FI 20051340
(43) Date of publication of application: 10.09.2008
(73) Proprietor: Kone Corporation, 00330 Helsinki (FI)
(72) Inventor: MUSTALAHTI, Jorma, FI-05620 Hyvinkää (FI); AULANKO, Esko, FI-04230 Kerava (FI)
(74) Representative: Graf Glück Habersack Kritzenberger
(86) International application number: PCT/FI2006/000410
(87) International publication number: WO 2007/074204

(56) References cited:
- JP-A- 53 018 160
- US-A- 4 591 025
- US-A1- 2005 224 301

## Description

The present invention primarily relates to an elevator traction sheave as defined in the preamble of claim 1.

In elevators in which the elevator rope is passed to the traction sheave more than once, usually in elevators with so-called double-wrap roping, the traction sheave grooves that meet a higher rope tension are subjected to a greater load. In double-wrap elevators without counterweight, the higher rope tension and the consequent higher rope pressure against the groove are always in the same rope grooves.

In double-wrap counterweighted elevators, the strain on the rope grooves is greater in the rope grooves on the "heavier side". Conventionally, the balancing of the elevator is such that the heavier half alternates fairly equally between the counterweight and elevator car directions. If a double-wrap counterweighted elevator has an exceptional balancing, or if the elevator mostly runs with a full or nearly full load, or alternatively if the elevator mostly runs with an empty or nearly empty elevator car, then the heavier half is predominantly either on the side of the elevator car or on the side of the counterweight relative to the traction sheave with double-wrap roping, and therefore correspondingly a greater strain is imposed either on the traction sheave rope grooves leading in the direction of the counterweight or on the traction sheave rope grooves leading in the direction of the elevator car. In the case of undercut rope grooves, a large undercut causes more rope wear than a small undercut, although on the other hand a good grip on the rope is achieved in return.

The US 4,591,025 proposes a traction sheave for a double wrap arrangement. The sheave comprises a number of undercut grooves and semicircular grooves such that an arrangement is achieved wherein all grooves, except the first and last grooves around which the main rope is wound, are provided with undercut. The intention of this arrangement is to provide a better grip between traction sheave and elevator rope in the windings between the first and last winding of the main rope groove of the traction sheave.

The JP 53-018160 discloses an elevator with counterweight. The document aims for a higher grip between traction sheave and hoisting rope by providing one groove with an undercut which provides an additional grip between the traction sheave and the counterweight.

The general aim of the invention is to achieve at least one of the following objectives. On the one hand, the invention aims at developing a new type of traction sheave that is especially suited for use in elevator solutions in which the hoisting ropes meet the traction sheave more than once. Another objective is to achieve an elevator in which the rope is better supported in the rope groove by using double-wrap roping or some other roping arrangement in which the hoisting ropes meet the traction sheave more than once. A further objective is to solve the problems encountered in prior art and especially to achieve a good hold/grip of the traction sheave on the hoisting rope while at the same time keeping the strain on the hoisting rope and/or traction sheave resulting from the mutual contact between the traction sheave and hoisting rope relatively small.

The traction sheave of the invention is characterized by what is presented in claim 1. Other embodiments of the invention are characterized by what is disclosed in the other claims. Inventive embodiments are also presented in the description part and drawings of the present application.

The traction sheave of the invention is provided with rope grooves differing from each other, said grooves having different capacities of gripping the hoisting rope. The method of achieving different gripping capacities of the rope grooves is to make the rope grooves different from each other in respect of their cross-sectional shape. The traction sheave is provided with rope grooves having different undercut widths.

The invention makes it possible to equalize the surface pressure between the grooves of the traction sheave. This reduces the wear of the grooves and ropes. By applying the invention, the grip/hold of the traction sheave on the hoisting rope can be improved, because the grip is distributed more evenly over the length of the traction sheave - hoisting rope contact. The better-than-usual grip can be utilized in the elevator e.g. as lighter structures. The invention is suited for application especially in conjunction with elevators without counterweight. The invention can also be utilized in conjunction with counterweighted elevators if the heavy direction is predominantly or always on one side of the traction sheave. Thus, the rope with a lower rope tension is placed in a groove of stronger grip, in other words, as the rope advances from the side of higher rope tension on the traction sheave, it first meets a rope groove providing a smaller grip, whereupon the rope runs further from the traction sheave to a double-wrap diverting pulley, passes around it and returns to the traction sheave, now meeting the traction sheave in a rope groove providing a greater grip, from which groove the rope leaves the traction sheave, running further in the direction of lower rope tension.

In the following, the invention will be described in detail by referring to a few embodiment examples and the attached drawings, wherein
- Fig. 1: presents a diagram representing so-called double-wrap roping of a traction sheave and the distribution of the magnitude of the normal force on the traction sheave,
- Fig. 2: presents a cross-section of the circumference of a traction sheave according to the invention,
- Fig. 3: presents a cross-section of the circumference of another traction sheave according to an embodiment not being part of the invention, and
- Fig. 4: presents a diagram representing an elevator applying the invention.

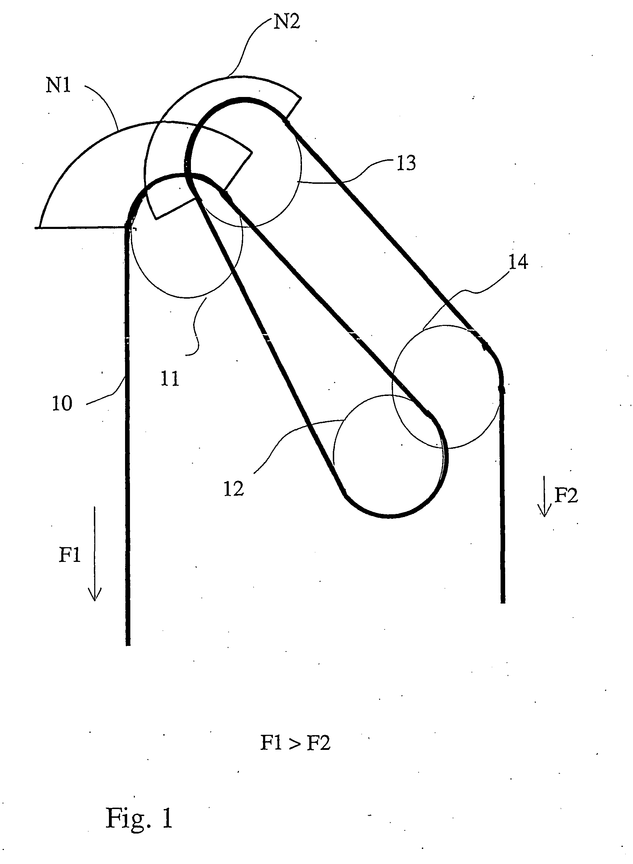

Fig. 1 in the drawings illustrates the passage of one hoisting rope in a case of so-called double-wrap roping, showing how the rope runs in the rope grooves 11,13 of the traction sheave and in the rope grooves 12,14 of a double-wrap diverting pulley. The rope force F1 on the heavier side is greater than the rope force F2 on the lighter side. The difference between the rope forces is achieved via the grip of the traction sheave. The magnitude of the normal force is represented by envelope curves N1 and N2. The normal force of the hoisting rope - rope groove contact changes by degrees along the rope grooves of the traction sheave, decreasing from the direction of the heavier side towards the lighter direction. Thus, the highest normal force and also the highest surface pressure are where the rope comes to the traction sheave from the heavier direction.

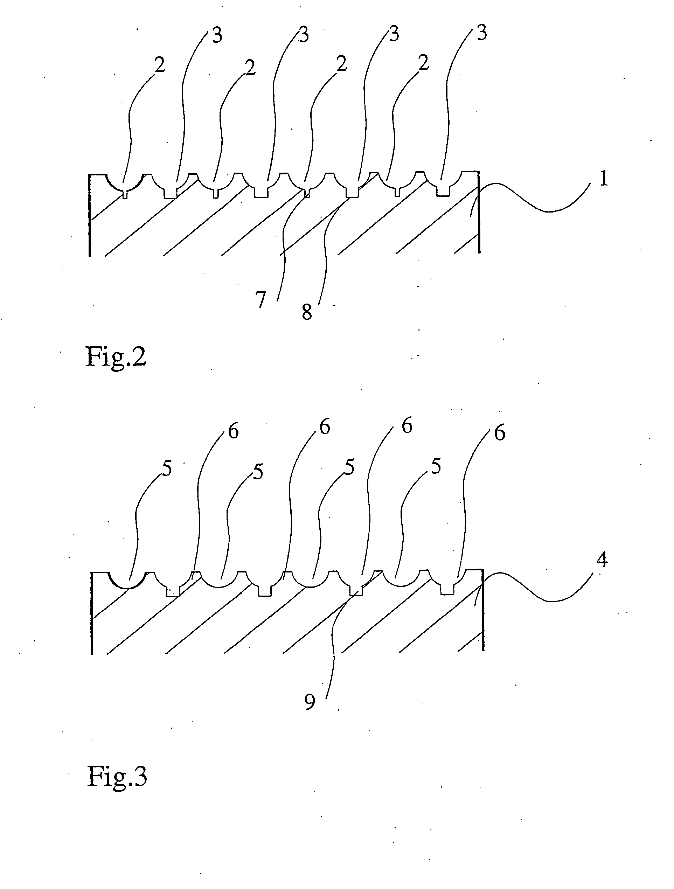

Fig. 2 presents a cross-section of the rim of a traction sheave 1 according to the invention. The rim of the traction sheave is provided with a number of rope grooves 2, 3, which receive the elevator hoisting ropes. Rope grooves 2 have a small undercut 7, so the hoisting ropes received into these grooves are supported by a larger area than the hoisting ropes received into rope grooves 3, which have a large undercut 8. For example, if an undercut 7 of 40 degrees were chosen for rope groove 2, where the normal force due to rope tension is higher, and if an undercut 8 of 60 degrees were chosen for rope groove 3, where the normal force due to rope tension is lower, then, in an elevator so designed that the surface pressure in the contact between traction sheave and hoisting rope is the highest feasible in a practical solution, the grip would be better by about 5% than in a corresponding solution with equal undercuts in all rope grooves.
Fig. 3 presents cross-section of the rim of second traction sheave 4 according to an embodiment not being part of the invention. The rim of the traction sheave is provided with a number of rope grooves 5, 6, which receive the elevator hoisting ropes. Rope grooves 6 have an undercut 9, so the hoisting ropes received into these grooves are supported by a smaller area than the hoisting ropes received into the grooves 5 of semi-circular cross-section.

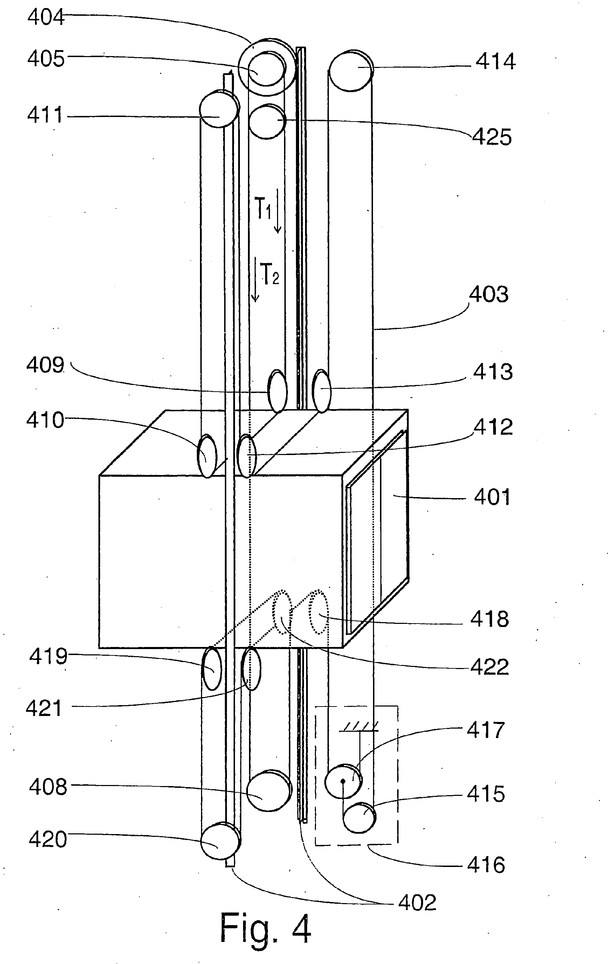

Fig. 4 is a diagrammatic representation of an elevator according to the invention. The elevator is preferably an elevator without machine room, with the drive machine 404 and compensating gear placed in the elevator shaft. The drive machine and/or the compensating gear may also be placed in a separate machine room. Such a machine room is preferably located above the elevator shaft, although the machine may also be placed elsewhere, especially in the case of an elevator of a different categorical type. The elevator presented in the figure belongs to the category of traction sheave elevator without counterweight and with machine room above, and it has an elevator car 401 moving along guide rails 402. A compensating gear 416 is fitted in place in the lower part of the elevator shaft. In Fig. 4, the compensating gear 416 is of a gravity-assisted type, to which it is possible to add additional weights to improve the operation of the compensating gear. Arranged in the compensating gear 416 is an auxiliary force, said auxiliary force acting substantially in the same direction with a first rope tension (T₁). The auxiliary force is used to increase the second rope tension T₂ in relation to the first rope tension T₁.

In Fig. 4, the hoisting ropes run as follows: One end of the hoisting ropes 403 is fixed to a diverting pulley 417 and/or its possible suspension arrangement, this diverting pulley 417 being fitted to hang on a rope portion coming downwards from diverting pulley 418, which hoisting rope portion passes around diverting pulley 417 and goes further to the anchorage of the second end of the hoisting rope 403 in the elevator shaft. A compensating device 416 is fitted in place in the elevator shaft. From diverting pulley 415, the hoisting ropes 403 go upwards and meet a diverting pulley 414 fitted in place in the upper part of the elevator shaft, passing around it along rope grooves provided on the diverting pulley 414. Having passed around diverting pulley 414, the ropes go further downwards to a diverting pulley 413 fitted in place on the elevator car 401, and having passed around this pulley the ropes 403 run further across the elevator car 401 to a diverting pulley 412 fitted in place on the other edge of the elevator car 401 and elevator shaft. The passage of the hoisting ropes 403 to the other edge of the elevator shaft is arranged by means of diverting pulleys 413 and 412. Having passed around diverting pulley 412, the rope goes further upwards to a diverting pulley 411 fitted in place in the upper part of the elevator shaft, passes around it and returns to a diverting pulley 410 mounted on the elevator car, and having passed around this pulley it runs further across the elevator car to a diverting pulley 409 on the elevator car and at the same time to the other edge of the elevator shaft. Having passed around diverting pulley 409, the hoisting ropes go further upwards to the traction sheave 405 of the hoisting machine 404, which is fitted in place in the upper part of the elevator shaft. From the traction sheave, the hoisting ropes are passed to a double-wrap diverting pulley 425 attached to the machine or mounted in conjunction with it, from which diverting pulley the hoisting ropes return to the traction sheave again. In the solution illustrated in Fig. 4, the double-wrap diverting pulley is placed directly below the traction sheave and it is at most the size of the traction sheave in diameter, a large rope angle being thus easily achieved at both points where the hoisting ropes meet the traction sheave. Diverting pulleys 414,413,412,411,410,409 together with the traction sheave 405 of the hoisting machine 404 form the overhead suspension of the elevator car, with the same suspension ratio as in the suspension below the elevator car, this suspension ratio being 4:1 in Fig. 4. The hoisting rope portion above the elevator car is subject to a first rope tension T₁. Having passed around the traction sheave 405, the ropes run further to a diverting pulley 408 fitted in place in the lower part of the elevator shaft. Having passed around diverting pulley 408, the ropes 403 go further upwards to a diverting pulley 422 fitted in place on the elevator car. Having passed around diverting pulley 422, the hoisting ropes run further in a manner similar to the roping above the elevator car 401, under the elevator car 401 to a diverting pulley 419 placed on the other edge of the elevator car, and at the same time the line of passage of the hoisting ropes 403 is shifted to the other edge of the elevator shaft. Having passed around diverting pulley 419, the hoisting ropes go further downwards to a diverting pulley 420 in the lower part of the elevator shaft, and having passed around it they go back to the elevator car 401 and to a diverting pulley 421 mounted on it. Having passed around this pulley, the hoisting ropes run further under the elevator car to a diverting pulley 418 placed on the other edge of the elevator car, and at the same time the line of passage of the hoisting ropes 403 is shifted back to the other edge of the elevator shaft. Having passed around diverting pulley 418, the hoisting rope goes further to the second diverting pulley 417 of the compensating device 416, and having passed around diverting pulley 417 the hoisting ropes go further to the anchorage of the second end of the hoisting ropes, which is located in a suitable place in the elevator shaft. Diverting pulleys 408,422,419,420,421,418,417 form the suspension and rope portion below the elevator car. This hoisting rope portion below the elevator car is subject to a second rope tension T₂ of the hoisting rope. The diverting pulleys in the lower part of the elevator shaft may be mounted in place on a frame structure formed by the guide rails 402 or to a beam structure located at the lower end of the elevator shaft or each pulley may be mounted separately in the lower part of the elevator shaft or on some other mounting arrangement appropriate for the purpose. The diverting pulleys on the elevator car may be mounted in place on the frame structure of the elevator car 401, e.g. on the car frame, or on a beam structure or beam structures in the elevator car or separately on the elevator car or some other appropriate mounting arrangement.

It is obvious to a person skilled in the art that different embodiments of the invention are not exclusively limited to the examples described above, but that they may be varied within the scope of the following claims. For example, instead of double-wrap roping, it is possible to use so-called triple-wrap roping, in which case the hoisting ropes meet the traction sheave three times and it may be preferable to provide the traction sheave with three kinds of rope grooves.

The skilled person understands that rope grooves differing from each other in respect of their holding properties can also be made on the traction sheave by other techniques besides undercutting. Rope grooves differing from each other in respect of their holding properties may be made of mutually different materials either partially or completely. The holding properties can also be influenced by using other types of rope groove shaping than undercutting; for example, V-grooves with different gradients provide a different hold of the rope wedged into the groove.

## Claims

1. Elevator traction sheave (1) provided with a number of rope grooves (2,3), whereby at least two adjacent rope grooves (2,3) have cross-sectional shapes differing from each other, **characterized in that** the rope grooves (2,3) of the traction sheave have an undercut (7,8), and the undercut (8) of at least one of the rope grooves (3) is wider than the undercut (7) of the adjacent rope groove (2).

2. Traction sheave (1) according to claim 1, **characterized in that** the roping to the traction sheave (1) is so arranged that the direction of higher rope tension in the running direction of the rope is predominantly or always on one side of the traction sheave (1).

3. Traction sheave (1) according to claim 1 or 2, **characterized in that** the traction sheave (1) has undercut rope grooves (2,3) and that the undercut (7,8) of each rope groove (2,3) has a width differing from the undercut (7,8) of the adjacent rope groove (2,3).

## Patentansprüche

1. Aufzugtreibscheibe (1), die mit einer Anzahl von Seilnuten (2, 3) versehen ist, wobei wenigstens zwei benachbarte Seilnuten (2, 3) eine Querschnittsform haben, die voneinander abweicht, **dadurch gekennzeichnet, dass** die Seilnuten (2, 3) der Treibscheibe eine eingeschnittene Vertiefung (7, 8) haben, und dass die eingeschnittene Vertiefung (8) wenigstens einer der Seilnuten (3) breiter ist als die eingeschnittene Vertiefung (7) der benachbarten Seilnut (2).

2. Treibscheibe (1) nach Anspruch 1, **dadurch gekennzeichnet, dass** der Seilverlauf zu der Treibscheibe (1) so arrangiert ist, dass die Richtung der höheren Seilspannung in Laufrichtung des Seiles überwiegend oder immer auf einer Seite der Treibscheibe (1) liegt.

3. Treibscheibe (1) nach Anspruch 1 oder 2, **dadurch gekennzeichnet, dass** die Treibscheibe (1) eingeschnittene Seilnuten (2, 3) hat, und dass die eingeschnittene Vertiefung (7, 8) jeder Seilnut (2, 3) eine Breite hat, die von der eingeschnittenen Vertiefung (7, 8) der benachbarten Seilnut (2, 3) abweicht.

## Revendications

1. Poulie de traction d'ascenseur (1) pourvue d'un certain nombre de gorges de câble (2, 3), au moins deux gorges de câble (2, 3) adjacentes présentant des profils de section différents, **caractérisée par le fait que** les gorges de câble (2, 3) de la poulie de traction ont une encoche (7, 8) et l'encoche (8) d'au moins une des gorges de câble (3) plus large que l'encoche (7) de la gorge de câble (2) adjacente.

2. Poulie de traction (1) selon la revendication 1, **caractérisée par le fait que** le câblage alimentant la poulie de traction (1) est disposé de telle sorte que la direction de tension de câble plus élevée dans la direction de défilement du câble est majoritairement ou toujours du côté de la poulie de traction (1).

3. Poulie de traction (1) selon la revendication 1 ou 2, **caractérisée par le fait que** la poulie de traction (1) a des gorges de câble (2, 3) à encoche et que l'encoche (7, 8) de chaque gorge de câble (2, 3) présente une largeur différente de l'encoche (7, 8) de la gorge de câble (2, 3) adjacente.
